# DEMANDE DE BREVET EUROPEEN

(11) **EP 1 156 443 A1**
(43) Date de publication de la demande: **21.11.2001**
(21) Numéro de dépôt: 01430015.6
(22) Date de dépôt: 18.04.2001
(51) Int. Cl.: G06K 7/10

(54) **Portique pour lecteur de codes sur des colis empilés**

(30) Priorité: 21.04.2000 FR 0005258
(71) Demandeur: Caustier France, 66000 Perpignan (FR)
(72) Inventeur: Caustier, Claude, 66000 Perpignan (FR)
(74) Mandataire: Domange, Maxime

(57) **Abrégé**

La présente invention concerne un portique pour lecture de codes (3) sur des colis (2) empilés, de préférence sur une palette (4), lesdits codes (3) étant placés sur une face des colis orientée vers l'extérieur de la pile (1), caractérisé en ce qu'il comprend au moins un, de préférence plusieurs lecteurs de codes (6), chaque lecteur (6) étant monté sur un support (5) , ledit support (5) pouvant se déplacer (24) dans un mouvement relatif par rapport auxdits colis, en regard des faces des colis comprenant lesdits codes, de manière à ce que lesdits lecteurs (6) soient capables de lire la totalité des codes (3) présents sur au moins une face, de préférence les quatre faces de ladite pile desdits colis empilés lorsque ledit support (5) se déplace (24) dans undit mouvement relatif par rapport auxdits colis.

La présente invention concerne également un procédé de lecture automatique de codes (3), de préférence de codes à barres, visibles sur des colis empilés, de préférence sur une palette (4), à l'aide d'un portique selon l'invention.

## Description

La présente invention concerne un dispositif pour lecture automatique de codes sur des colis empilés, de préférence sur une palette, lesdits codes étant visibles à l'extérieur de la pile et un procédé de lecture automatique desdits codes, de préférence des codes à barres.

Les codes à barres sont maintenant bien connus et appliqués dans divers domaines. Ils permettent d'identifier automatiquement l'origine, la nature, la destination, et plus généralement d'assurer la traçabilité d'articles sur lesquels ils sont apposés à l'aide de cellules de lecture optique.

Ces codes à barres sont constitués par un nombre donné de barres rectangulaires parallèles de même longueur, et dont la largeur de chacune est multiple d'un entier de celle d'un module de base. Ils sont lus par un faisceau laser émis par une cellule de lecture optique et déplacés par transversalement par rapport à la longueur des barres et à vitesse angulaire constante.

Le principe de ces codes à barres et lecteurs optiques sont décrits entre autres dans FR 2 543 308, auquel on pourra se référer pour la meilleure intelligence de la présente invention.

On connaît différents procédés et dispositifs de lecture d'un code à barres.

Tout d'abord, les codes peuvent être lus manuellement par déplacement d'un stylo optique. On connaît également, notamment dans les installations automatiques de tri postal, les dispositifs et procédés consistant à faire défiler les objets portant les codes à lire devant un oeil de lecture fixe et statique.

Dans FR 2 543 308, on décrit un procédé et un dispositif de détection de la position d'objets stockés sur palette, ces objets étant destinés à être transférés à l'aide d'un chariot de la palette sur laquelle ils sont stockés sur une autre palette. Dans FR 2 543 308, on utilise donc un chariot qui se déplace longitudinalement le long d'un rail de guidage devant la rangée de palettes de stockage, le chariot portant un lecteur de codes à barres. Le lecteur se déplace aussi verticalement sur le chariot par un dispositif de déplacement vertical pas à pas pour être ajusté à la hauteur des boîtes à transférer. Dès que la lecture optique d'une boîte a été obtenue, qui permet de déterminer l'identification et la position de la boîte, le commutateur de balayage du lecteur interrompt le balayage. A l'arrêt du balayage, est déclenché un dispositif de mesure de la distance parcourue par le lecteur le long du rail. On peut ainsi soit déstocker couche par couche une palette puis passer à une palette suivante, soit déstocker les couches supérieures de plusieurs palettes accolées et alignées puis passer aux couches inférieures en fonction de commandes à préparer ; la gestion de l'ensemble de l'installation étant assurée par un microprocesseur auquel on a transmis des instructions relatives aux commandes à préparer.

Dans FR 2 606 871, il est décrit un dispositif de reconnaissance d'objets disposés sur une palette permettant d'identifier des objets en vue par exemple de procéder à une dépalétisation automatique de ces derniers. Un tel dispositif est constitué par la combinaison de moyens de prises de vues tels qu'une caméra coopérant avec une source de lumière cohérente, respectivement capteur et émetteur. Ces deux éléments sont placés au-dessus du plan contenant les objets, de telle sorte qu'un balayage pas à pas de l'émetteur sur toute la surface permet au capteur de reconnaître ligne par ligne les objets correspondants.

Il n'existe donc aucun dispositif de lecture automatique de la totalité des codes à barres sur des colis empilés sur une palette, notamment sur l'une quelconque des faces extérieures de la pile, autre que la lecture manuelle et individuelle des codes à barres sur les différents colis empilés. Mais cette lecture manuelle est longue et fastidieuse et induit des coûts d'exploitation importants. En outre, elle peut entraîner certaines erreurs de manipulations, telles que mauvaise utilisation de l'appareil de lecture, oubli de lecture de certains codes ou double lecture de certains codes.

Le but de la présente invention consiste à fournir un dispositif et un procédé de lecture automatique et aussi infaillible que possible du code à barres apposé sur tous les colis empilés sur une palette.

Un autre but de l'invention est de fournir un tel dispositif et procédé qui soit extrêmement précis, facile à réaliser, peu onéreux et facile à mettre en oeuvre.

L'intérêt de ce type de dispositif et procédé de lecture automatique de la totalité des codes à barres apposés sur la totalité des colis empilés sur une palette est de permettre, dès l'arrivage d'une palette dans un entrepôt ou avant son expédition, ou plus généralement dans n'importe quelle phase de production ou de distribution suivie d'une palettisation, d'identifier la totalité du contenu de la palette :
- soit pour contrôler les produits, notamment vérifier la conformité avec une commande ;
- soit pour assurer la traçabilité des produits sur la palette si leur code comporte une information concernant un numéro de lot.

Pour ce faire, la présente invention fournit un dispositif pour lecture de codes sur des colis empilés, de préférence sur une palette, lesdits codes étant placés sur une face des colis orientés vers l'extérieur de la pile, caractérisé en ce qu'il comprend plusieurs lecteurs de codes, chaque lecteur étant monté sur un support, ledit support comprenant un cadre horizontal pouvant se déplacer en translation verticale, chacun des quatre côtés dudit cadre se déplaçant en regard de chaque face de la pile desdits colis empilés comprenant lesdits codes, de manière à ce que lesdits lecteurs soient capables de lire la totalité des codes présents sur au moins une face, de préférence les quatre faces de ladite pile desdits colis empilés lorsque ledit support se déplace dans un mouvement relatif par rapport auxdits colis.

Les lecteurs optiques peuvent être des lecteurs multidirectionnels ou unidirectionnels en ce qui concerne la direction de balayage angulaire du faisceau laser. Le nombre, le positionnement par rapport à la pile et la disposition respective des lecteurs, ainsi que leurs caractéristiques de lecture sont telles que les largeurs de champs de lecture des différents lecteurs peuvent recouvrir si nécessaire la totalité de la largeur des faces de la pile de colis sur la palette, en regard desquels ils sont disposés. Le portique de l'invention permet donc de lire tous les codes à barres visibles sur les quatre faces extérieures de la pile des colis empilés sur la palette.

Selon l'invention, lesdits colis empilés sont fixes et ledit support de lecteur peut se déplacer en regard des faces desdits colis comprenant lesdits codes.

Dans un mode de réalisation particulier, lesdits codes sont des codes à barres, lesdites barres étant sensiblement verticales, disposées côte à côte dans une direction sensiblement horizontale, et lesdits lecteurs de codes à barres sont des lecteurs optiques à rayons laser balayant l'espace dans une direction sensiblement horizontale, de sorte que le ou lesdits rayon(s) laser peuvent parcourir toutes les barres de la totalité des codes visibles sur au moins une face de ladite pile, de préférence les quatre faces.

Avantageusement, les dimensions dudit cadre sont telles que la distance des lecteurs montés sur ledit cadre, par rapport au colis, correspond à la largeur du champ de lecture nécessaire dudit lecteur pour lire le module du code à barres appliqué sur les colis. Les lecteurs de codes à barres sont en effet caractérisés par un champ de lecture ou largeur de champ recommandés en fonction du module du code à barres à lire, le module du code à barres correspondant à la largeur minimum en millimètres d'une barre.

De préférence, ledit cadre comporte jusqu'à 16 lecteur(s), de préférence de 4 à 8 lecteurs montés de manière fixe mais ajustables en translation le long des différents côtés constituant ledit cadre, et en rotation dans un plan vertical, le nombre desdits lecteurs sur chaque côté dudit cadre en regard de chacune des 4 faces de ladite pile de colis étant de 1 à 3 lecteurs.

Selon une première variante préférée de réalisation de l'invention, le dispositif pour lecture de codes selon l'invention est caractérisé en ce que ledit support est un cadre carré en matériau rigide léger, de préférence de l'aluminium, disposé horizontalement, qui se déplace en translation verticale en coulissant le long d'au moins deux poutres verticales, lesdites poutres étant reliées à leur sommet par au moins une poutre horizontale. Dans cette première variante, de préférence, un système de guidage dudit cadre par rapport auxdites poutres verticales comprend au moins un premier élément de guidage longitudinal de forme différente sur chacune desdites poutres, chacun desdits premiers éléments de guidage coopérant avec un deuxième élément de guidage complémentaire sur ledit cadre.

Dans un mode de réalisation de cette première variante, lesdites poutres verticales sont disposées au regard de points symétriques dudit cadre, de préférence il s'agit de deux poutres à glissières verticales disposées au regard du milieu de chacun de deux côtés opposés dudit cadre.

Dans un autre mode de réalisation, les deux poutres sont disposées au regard d'un même côté dudit cadre, notamment lorsque ledit cadre est le cadre d'une cercleuse servant au cerclage de palette.

Dans un mode de réalisation particulier de cette variante, ledit cadre se déplace sous l'action d'un moteur qui entraîne en rotation un arbre horizontal situé dans ladite poutre supérieure horizontale, ledit arbre coopérant à chaque extrémité avec une chaîne qui se déplace le long de chacune desdites poutres verticales, chacune desdites chaînes étant reliées à une extrémité audit cadre et à l'autre extrémité à un contrepoids se déplaçant à l'intérieur de chacune desdites poutres verticales.

Dans une deuxième variante de réalisation du dispositif de l'invention, ledit support comprend un premier cadre qui est suspendu à quatre câbles reliés à une extrémité à chacun des quatre angles dudit cadre, et enroulé à l'autre extrémité dans une poulie horizontale placée dans la partie supérieure du portique comprenant quatre poutres verticales munies d'éléments de guidage dudit cadre, lesdites quatre poutres verticales étant reliées au sommet par un deuxième cadre fixe horizontal qui soutient ladite poulie et un moteur, ledit moteur entraînant en rotation ladite poulie pour déplacer en translation verticale ledit premier cadre.

La présente invention a également pour objet un procédé de lecture automatique de codes, de préférence de codes à barres, visibles sur des colis empilés, de préférence sur une palette, à l'aide d'un portique selon l'invention. Dans ce procédé, on dispose tous les colis de telle sorte que leur code à barres soit visible sur une des faces extérieures de la pile des colis.

Plus particulièrement, on réalise les étapes dans lesquelles :
- on positionne lesdits colis ou ledit dispositif de telle sorte que lesdits colis se trouvent en regard desdits lecteurs à une distance correspondant de préférence au champ de lecture optimum du module des codes à barres appliqués sur lesdits colis ;
- on réalise le déplacement relatif dudit support de lecteur par rapport audit colis et,
- les informations relatives aux codes lus sont stockées et analysées dans un système informatique.

De préférence, on positionne la pile desdits colis de telle sorte que les quatre faces de ladite pile sont situées à égale distance des différentes lecteurs en regard de chacune desdites faces.

D'autres caractéristiques et avantages apparaîtront à la lumière de la description détaillée qui va suivre.

Les figures 1 à 5 représentent un premier mode de réalisation d'un portique selon l'invention.

La figure 1 représente une vue de côté du portique.

La figure 2 représente une vue de face du portique.

La figure 3 représente une vue de dessus du portique.

Les figure 4a- 4b et 5a - 5b représentent le détail des éléments de guidage du support de lecteur coopérant avec une glissière complémentaire le long des poutres verticales en vue de dessus (figures 4a et 4b) et en vue de côté (figures 5a et 5b).

Les figures 6 à 8 représentent un deuxième mode de réalisation d'un portique selon l'invention.

La figure 6 représente une vue de dessus de ce deuxième portique.

La figure 7 représente une vue de côté de ce deuxième portique.

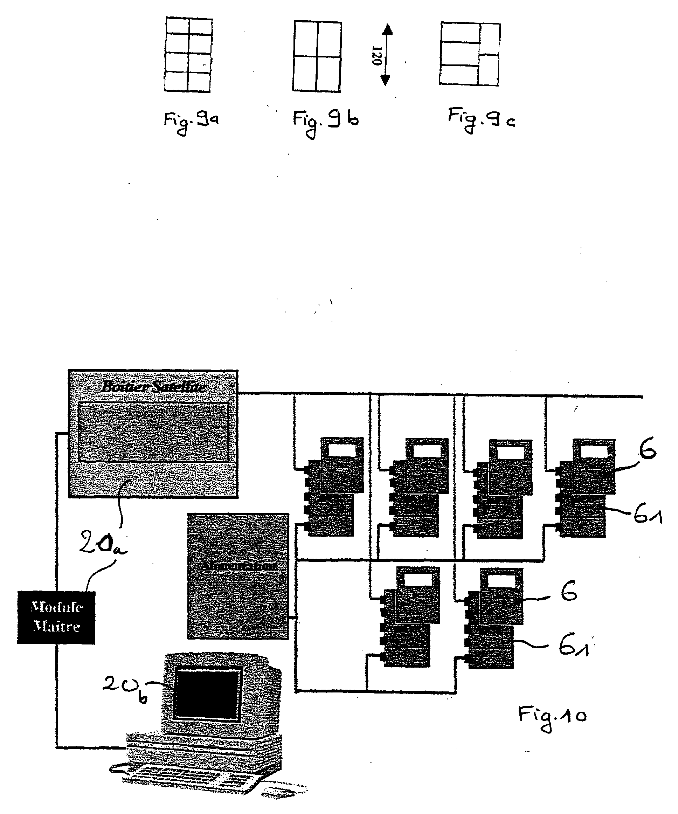

La figure 8 représente une vue de dessus en coupe Aa.

Les figures 9a, 9b, 9c représentent différents modes d'organisation de colis sur une palette.

La figure 10 représente un schéma du réseau de différentes lecteurs de codes à barres et du système informatique.

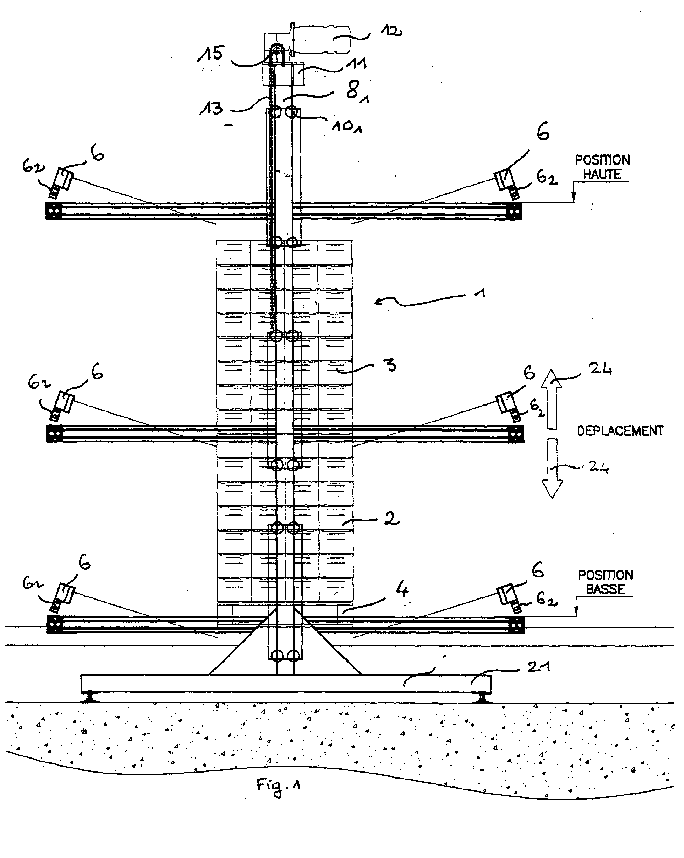

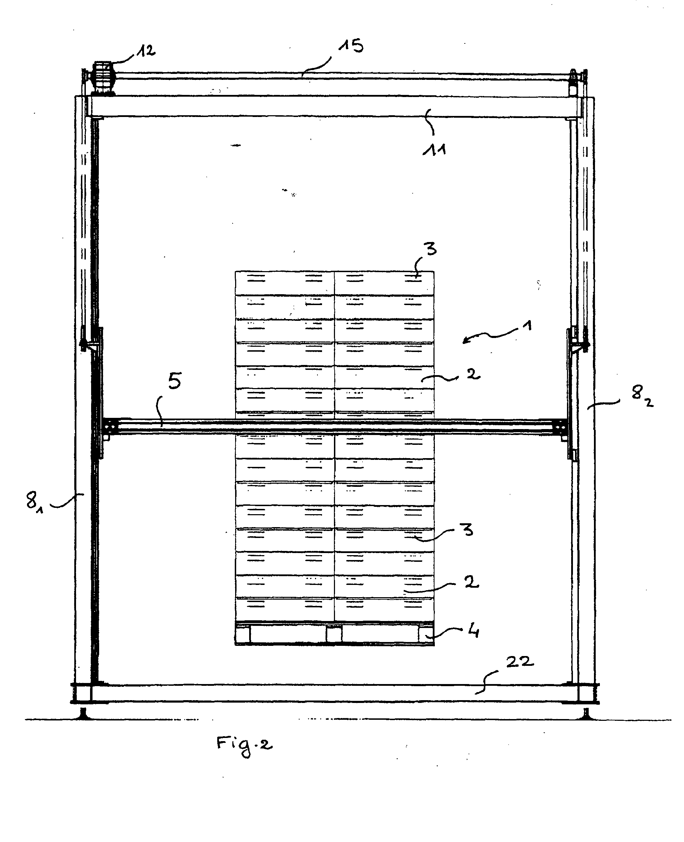

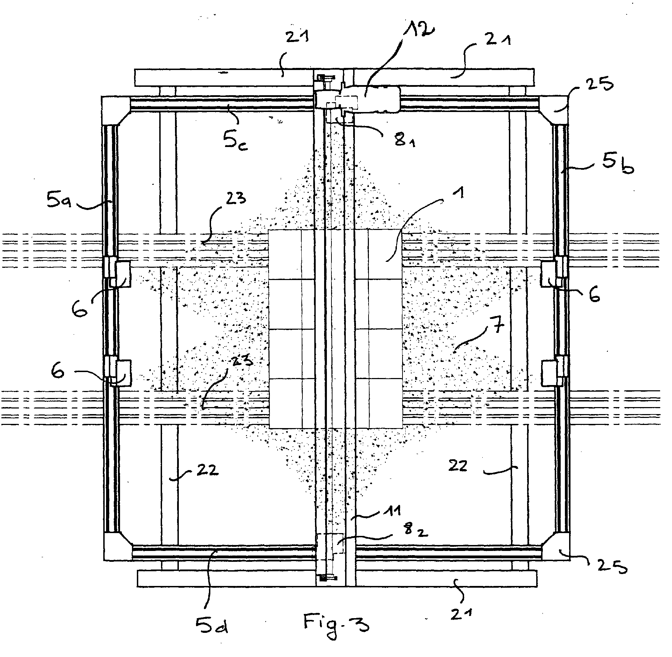

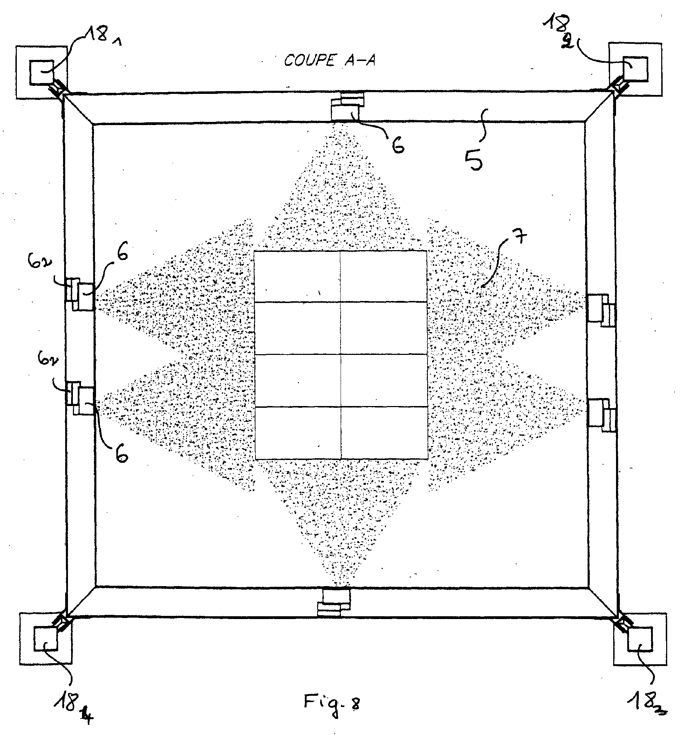

Le premier mode de réalisation d'un portique selon l'invention représenté sur les figures 1 à 5 comprend un cadre 5 qui se déplace en translation verticale 24. Ce cadre 5 est de forme carrée. Il est réalisé en matériau rigide et léger, à savoir avec quatre profilés d'aluminium qui sont reliés à leurs extrémités par des pièces d'angle 25. Deux côtés opposés 5a - 5b (figure 3) supportent chacun deux lecteurs optiques 6 de codes à barres 3, les deux autres côtés opposés 5c - 5d (figure 3) ne supportent qu'un seul lecteur 6 de codes à barres, car ce portique est destiné à lire des codes d'un empilement de colis de type représenté sur la figure 9a, représentant des faces de piles de colis de 120 et 80 cm en face des côtés 5a - 5b et respectivement 5c - 5d.

La largeur du cadre 5 est telle qu'elle permet une distance de lecture d'environ 80 cm, comme recommandé pour le type de codes à barres et le type de lecteurs utilisés, qui seront décrits plus loin.

Les lecteurs 6 sont montés sur des supports 6₂ dont la position peut être ajustée le long des différents côtés 5a à 5d du cadre 5 en coulissant dans des rainures desdits profilés constituant lesdits côtés. Une fois à la bonne position, les supports 6₂ sont fixés de manière à ce qu'ils ne puissent plus se déplacer en translation horizontale. Les supports 6₂ et lecteurs 6 peuvent aussi être déplacés en rotation de manière à être légèrement inclinés soit vers le haut, soit vers le bas, comme il sera expliqué plus loin.

Ainsi, le nombre et la position des lecteurs 6 sont elles que les champs de lecture 7 des différentes lecteurs 6 se chevauchent à leurs extrémités latérales et recouvrent la largeur totale de la palette, garantissant ainsi une lecture de la totalité des codes susceptibles d'être exposés sur chacune des quatre faces de la pile 1 de colis 2.

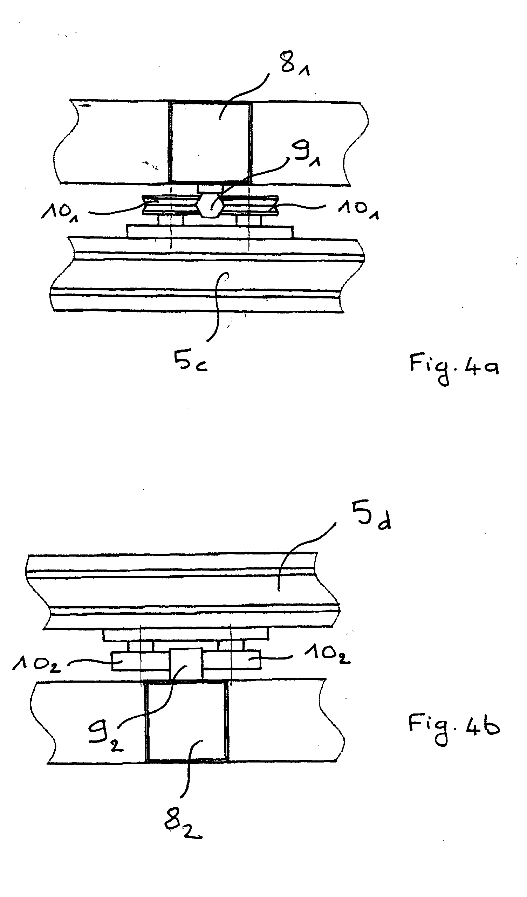

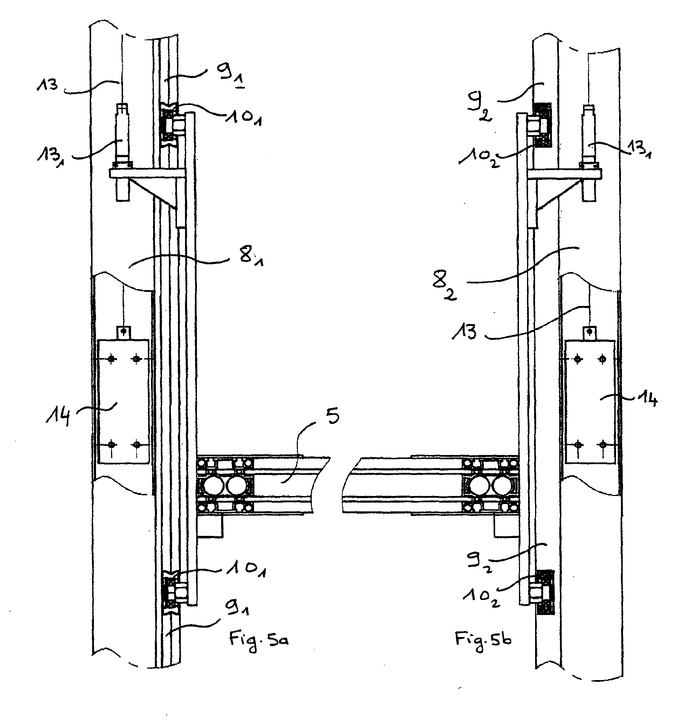

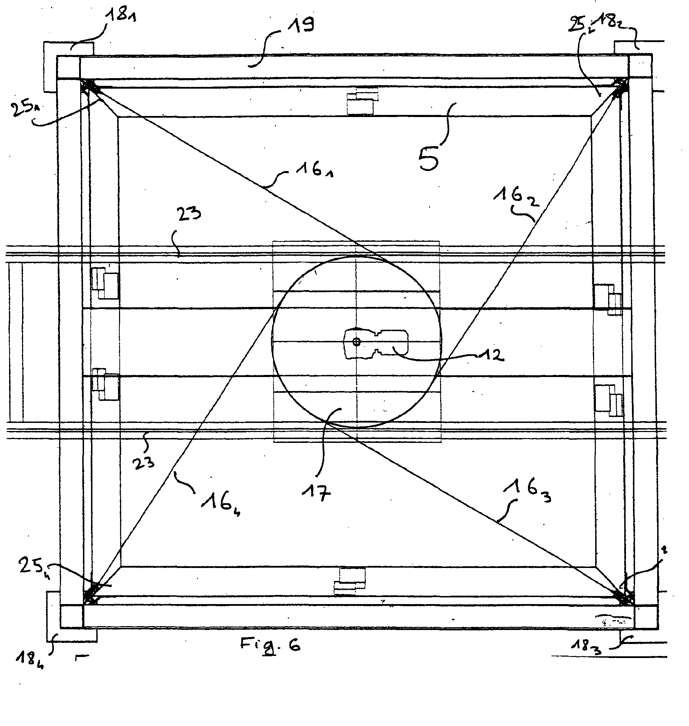

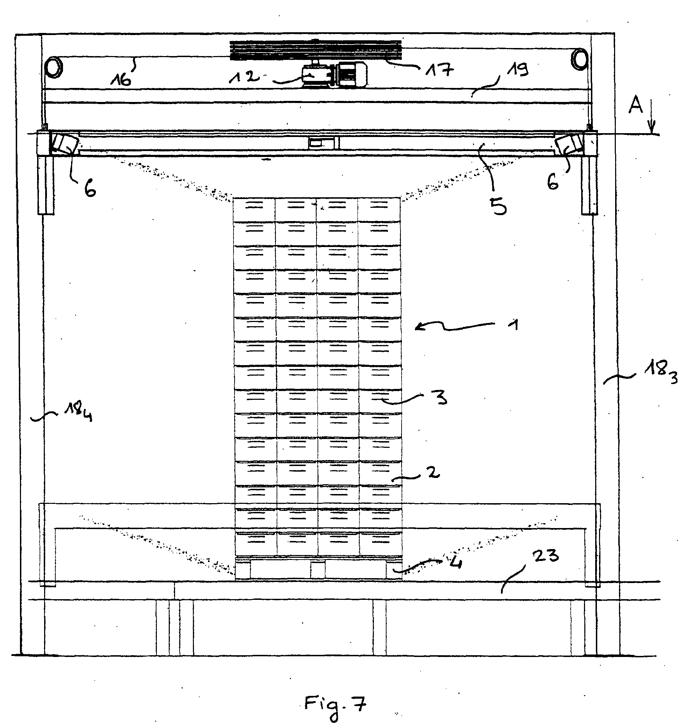

Le cadre 5 coulisse verticalement le long de deux poutres verticales 8₁, 8₂. Ces poutres verticales 8₁, 8₂ reposent sur des embases 21 reliées entre elles par des poutres 22 perpendiculaires aux embases 21 et parallèles entre elles, et formant ainsi une base stable. A leurs extrémités supérieures, les poutres verticales 8₁ et 8₂ sont reliées par une poutre horizontale 11 qui stabilise les poutres verticales 8₁, 8₂ également et sert de support à un moteur 12, qui entraîne en rotation un arbre 15 qui s'étend le long de la poutre 11, et à chaque extrémité duquel sont montés des pignons qui coopèrent chacun avec une chaîne 13. Chaque chaîne 13 est reliée à une extrémité 13₁ à un point d'ancrage sur le cadre 5, et à l'autre extrémité 13₂ à un contrepoids 14. Chaque contrepoids 14 se déplace à l'intérieur de chacune des poutres verticales 22. Le cadre 5 comporte au milieu de ces deux côtés opposés 5c-5d, les éléments de guidage 10₁ et 10₂, placés à l'extérieur de ceux-ci, est de formes différentes. Les éléments de guidage 10₁ sont constitués de poulies et les éléments de guidage 10₂ sont constitués de galets. Les poulies 10₁ et les galets 10₂ coopèrent avec des glissières en forme de profilés 9₁, 9₂ le long des poutres 8₁ et respectivement 8₂, qui ont des formes complémentaires aux éléments de guidage 10₁ et 10₂, à savoir une forme carré 9₂ pour les galets 10₂ et hexagonale 9₁ pour les poulies 10₁, comme représenté sur les figures 4a et 4b. Ce mécanisme de déplacement du cadre verticalement permet d'obtenir un mouvement régulier, aussi bien dans la montée que dans la descente, et à vitesse de l'ordre de 1 mètre par seconde, compatible avec les caractéristiques de lecture du lecteur, en fonction de la largeur de champ de lecture à lire. Les éventuelles faibles vibrations du cadre dans son mouvement n'altèrent pas la qualité de la lecture des codes, car le vecteur de vibrations, qui a la même direction que le mouvement du cadre est perpendiculaire à la direction horizontale de lecture des codes par le rayon laser. Il n'interfère donc pas avec la vitesse de déplacement du rayon laser et donc, ne perturbe pas la lecture des codes à barres.

En particulier, la différence de formes des glissières et éléments de guidage de chaque côtés du cadre 5 permet d'éviter le blocage du mouvement du cadre en translation verticale.

Sur les figures 6 à 8, on a représenté un deuxième mode de réalisation d'un portique selon l'invention à titre illustratif, dans lequel le 4-5 supportant les six lecteurs 6 optiques de codes à barres est suspendu à ces quatre angles 25 à des câbles 16₁, 16₂, 16₃, 16₄, qui s'enroulent à leur autre extrémité dans une poulie 17 horizontale, ladite poulie étant soutenue par un deuxième cadre 19 monté au sommet de quatre poutres verticales 18₁, 18₂, 18₃, 18₄. Le cadre 5 coulisse à l'intérieur du portique formé par ces quatre poutres verticales 18₁ à 18₄. Les poutres verticales 18₁ à 18₄ comportent des glissières ou éléments de guidage qui coopèrent avec des éléments de guidage ou glissières complémentaires disposées dans les angles 25 du cadre 5 support de lecteur.

Sur les figures 3 et 6, on a représenté des convoyeurs 23 positionnés au dessus des poutres de base 22 permettant de transporter la palette 1 au centre du cadre 5, à égale distance des différents côtés 5a à 5d.

D'autres variantes de réalisation d'un portique selon l'invention peuvent être envisagées. En particulier, les lecteurs peuvent être disposés au regard d'une seule face de la pile des colis, mais la palette étant soutenue par une plaque tournante qui par rotation permet d'exposer successivement les quatre faces de la pile au regard desdits lecteurs situés sur une poutre horizontale mobile en translation verticale, au regard de ladite face.

De même, on a décrit la lecture de codes sur des colis, mais il peut s'agir de tout autre contenant de préférence parallélépipédique. Enfin, ceux-ci peuvent être soutenus par tout autre moyen remplissant la même fonction qu'une palette.

Pour être lu par un portique selon l'invention, les colis 2 doivent empilés de manière à ce que chaque colis 2 présente une de ses faces visibles de l'extérieur. Sur les figures 9a, 9b et 9c, on a représenté à titre illustratif différents modes d'organisation des colis 2 sur une palette 4 de dimension 100 x 120 (cm) avec :
- sur la figure 9c, cinq colis de 60 x 40 (cm) par couche ;
- sur la figure 9b, quatre colis de 60 x 40 (cm) par couche ;
- sur la figure 9a : huit colis de 40 x 30 (cm) par couche.

Chaque colis 2 porte un code à barres 3 sur une face visible de l'extérieur. Ces codes peuvent se trouver à n'importe quel endroit de ladite face visible, pour autant qu'ils soient disposés sensiblement horizontalement, c'est à dire avec des barres sensiblement verticales et disposées parallèlement, de manière à garantir qu'un rayon laser se déplaçant sensiblement horizontalement puisse traverser la totalité des barres disposées sur une face de la pile 1.

Dans les exemples précédents, on a utilisé des lecteurs de codes à barres BCL80 avec décodeur intégré le la société LEUZE ELECTRONIQUE.

Les codes à barres étaient du type 128C selon la norme AFNOR-NF-Z63-300-4, correspondant à la norme EN 799. Les codes à barres sont caractérisés essentiellement par le module qui est la taille de l'élément le plus fin d'un code à barres en millimètres. Pour ce type de module, la distance d'éloignement dans laquelle un code à barres doit être lu par le lecteur, qui correspond aussi à la largeur de son champ de lecture, est comme mentionné précédemment de 80 cm. Ces lecteurs de codes à barres fonctionnent par balayage horizontal d'un rayon laser. De préférence, le plan de la fenêtre de lecture et donc du rayon laser est penché de 9 à 15 degrés environ par rapport au plan du code à barres, ou respectivement par rapport à l'horizontale pour éviter que le rayon réfléchi sur le code à barres et renvoyé sur la fenêtre de lecture ne provoque un éblouissement, ce qui perturbe l'analyse des informations.

Les différents lecteurs 6 sont connectés en réseau grâce à des unités de branchements 6₁ représentés sur la figure 10, la mise en réseau se faisant par branchement en série des différents interfaces avec un gestionnaire de réseau 20ₐ, qui transmet les données de tous les lecteurs à un microprocesseur 20_{b}.

## Revendications

1. Dispositif pour lecture de codes (3) sur des colis (2) empilés, de préférence sur une palette (4), lesdits codes (3) étant placés sur une face des colis orientée vers l'extérieur de la pile (1), **caractérisé en ce qu'**il comprend plusieurs lecteurs de codes (6) montés sur un support (5) comprenant un cadre horizontal (5) pouvant se déplacer en translation verticale (24), chacun des quatre côtés (5a, 5b, 5c, 5d) dudit cadre se déplaçant en regard de chaque face de la pile (1) desdits côtés empilés comprenant lesdits codes, de manière à ce que lesdits lecteurs (6) soient capables de lire la totalité des codes (3) présents sur au moins une face, de préférence les quatre faces de ladite pile desdits colis empilés lorsque ledit support (5) se déplace (24) dans undit mouvement relatif par rapport auxdits colis.

2. Dispositif pour lecteur de code selon la revendication 1, **caractérisé en ce que** lesdits codes (3) sont des codes à barres, lesdites barres étant sensiblement verticales, disposées côte à côte dans une direction sensiblement horizontale, et lesdits lecteurs (6) de codes à barres sont des lecteurs optiques à rayons laser balayant (7) l'espace dans une direction sensiblement horizontale, de sorte que le ou lesdits rayon(s) laser peuvent parcourir toutes les barres de la totalité des codes visibles sur au moins une face de ladite pile, de préférence les 4 faces.

3. Dispositif selon l'une des revendications 1 ou 2 **caractérisé en ce que** les dimensions dudit cadre (5) sont telles que la distance des lecteurs (6) montés sur ledit cadre, par rapport au colis, correspond à la largeur du champ de lecture nécessaire dudit lecteur pour lire le module du code à barres appliqué sur les colis.

4. Dispositif selon l'une des revendications 1 à 3, **caractérisé en ce que** ledit cadre (5) comporte jusqu'à 16 lecteurs de préférence de 4 à 8 lecteurs (6) montés de manière fixe mais ajustables en translation le long des différents côtés (5a, 5b, 5c, 5d) constituant ledit cadre, et en rotation dans un plan vertical, de nombre desdits lecteurs sur chaque côté (5a, 5b, 5c, 5d) dudit cadre en regard de chacune des 4 faces de ladite pile de colis étant de 1 à 3 lecteurs.

5. Dispositif pour lecture de codes selon l'une des revendications 1 à 4, **caractérisé en ce que** ledit support (5) est un cadre carré en matériau rigide léger, de préférence de l'aluminium, disposé horizontalement, qui se déplace en translation verticale en coulissant le long d'au moins deux poutres verticales (8₁, 8₂), lesdites poutres (8₁, 8₂) étant reliées à leur sommet par au moins une poutre horizontale (11).

6. Dispositif selon la revendication 5 **caractérisé en ce que** lesdites poutres verticales (8₁, 8₂) sont disposées au regard de points symétriques dudit cadre , de préférence, lesdites poutres sont deux poutres à glissières verticales disposées au regard du milieu de chacun des deux côtés opposés dudit cadre.

7. Dispositif selon la revendication 5 ou 6, **caractérisé en ce qu'**un système de guidage dudit cadre (5) par rapport auxdites poutres verticales (8₁, 8₂) comprend au moins un premier élément de guidage longitudinal (9₁, 9₂) de forme différente sur chacune desdites poutres, chacun desdits premiers éléments de guidage coopérant avec un deuxième élément de guidage complémentaire (10₁, 10₂) sur ledit cadre.

8. Dispositif selon les revendications 5 à 7, **caractérisés en ce que** ledit cadre (5) se déplace sous l'action d'un moteur (12) qui entraîne en rotation un arbre horizontal (15) situé dans ladite poutre supérieure horizontale (11), ledit arbre (15) coopérant à chaque extrémité avec une chaîne (13) qui se déplace le long de chacune desdites poutres verticales (8₁, 8₂), chacune desdites chaînes (13) étant reliées à une extrémité (13₁) audit cadre et à l'autre extrémité (13₂) à un contrepoids (14) se déplaçant à l'intérieur de chacune desdites poutres verticales (8₁, 8₂).

9. Dispositif selon l'une des revendications 1 à 4 **caractérisé en ce que** ledit support (5) comprend un premier cadre (5) qui est suspendu à 4 câbles (16₁, 16₂, 16₃, 16₄) reliés à une extrémité à chacun des 4 angles (25₁, 25₂, 25₃, 25₄) dudit cadre, et enroulés à l'autre extrémité dans une poulie horizontale (17) placée dans la partie supérieure du portique comprenant quatre poutres verticales (18₁, 18₂, 18₃, 18₄) munies d'éléments de guidage dudit premier cadre, lesdites quatre poutres verticales (18₁, 18₂, 18₃, 18₄) étant reliées au sommet par un deuxième cadre fixe horizontal (19) qui soutient ladite poulie (17) et un moteur (12), ledit moteur (12) entraînant en rotation ladite poulie (17) pour déplacer en translation verticale ledit premier cadre.

10. Procédé de lecture automatique de codes (3), de préférence de codes à barres, visibles sur des colis empilés, de préférence sur une palette (4), à l'aide d'un dispositif selon l'une des revendications 1 à 9.

11. Procédé selon la revendication 10, **caractérisé en ce qu'**on réalise les étapes dans lesquelles :
- on positionne lesdits colis (2) ou ledit dispositif de telle sorte que lesdits colis (2) se trouvent en regard desdits lecteurs (6) à une distance correspondant de préférence au champ de lecture optimum du module des codes à barres appliqués sur lesdits colis ;
- on réalise le déplacement relatif dudit support (5) de lecteurs (6) par rapport audit colis (2) et,
- les informations relatives aux codes lus sont stockées et analysées dans un système informatique (20ₐ, 20_{b}).

12. Procédé selon la revendication 11, **caractérisé en ce qu'**on positionne la pile (1) desdits colis (2) de telle sorte que les 4 faces de ladite pile sont situées à égale distance des différentes lecteurs (6) en regard de chacune desdites faces.
